# EUROPEAN PATENT SPECIFICATION

(11) **EP 1 431 131 B1**
(45) Date of publication and mention of the grant of the patent: **21.06.2006**
(21) Application number: 03026692.8
(22) Date of filing: 20.11.2003
(51) Int. Cl.: B60R 21/16

(54) **Vehicle with occupant's leg protection system**
Fahrzeug mit Insassenbeinschutzvorrichtung
Véhicule avec système de protection pour les jambes d'un passager

(30) Priority: 16.12.2002 JP 2002364013
(43) Date of publication of application: 23.06.2004
(73) Proprietor: TAKATA CORPORATION, Minato-ku, Tokyo 106-8510 (JP)
(72) Inventor: Yoshikawa, Hiromichi, Takata Corporation, Tokyo 106-8510 (JP); Abe, Kazuhiro, Takata Corporation, Tokyo 106-8510 (JP)
(74) Representative: Banzer, Hans-Jörg

(56) References cited:
- DE-A- 10 021 893
- US-A- 6 092 836
- US-A1- 2002 171 231
- US-B1- 6 217 059

## Description

The present invention relates to a vehicle equipped with an occupant's leg protection system for preventing the legs of an occupant from hitting against an instrument panel and a dash panel in the event of a frontal crash of a vehicle such as a car.

From US 6,092,836 being the closest prior art, a leg protection device is known in which an airbag is disposed in the dashboard in front of a vehicle passenger seat. The location of the airbag is selected such that upon inflation the airbag is disposed in front of the legs and knees of a passenger sitting on the seat. In particular, an arrangement is described in which the airbag is arranged behind an opening in a lower panel in front of the passenger seat. This opening is covered by an elongated lid which is pivotably mounted to the lower panel. Upon inflation of the airbag, the lid is pushed open by the airbag which is then forced out into the vehicle passenger compartment, in front of the legs of the passenger.

Japanese Unexamined Patent Application Publication No. 10-315894 describes an occupant's leg protection system equipped with an airbag that deploys forward of the legs of an occupant in a car seat in which the airbag inflates forward of the knees and then deploys downward along the shins.

In the occupant's leg protection system, the lower part of an inflated airbag is interposed between the instrument panel and the dash panel and the ankles or the insteps of the occupant's legs to absorb the impact applied to the ankles or the insteps.

Referring to Fig. 5 of the Japanese Unexamined Patent Application Publication No. 10-315894, there is a space between the lower end of the instrument panel and the dash panel, into which the lower part of the airbag is sometimes retracted. Therefore, in order to sufficiently receive the ankles or the insteps, the capacity and the inner pressure of the airbag need to be increased, thus tending to increase the cost.

It is an object of the present invention to provide a vehicle equipped with an occupant's leg protection system having an airbag capable of inflating between occupant's legs and an instrument panel, in which the airbag is prevented from entering the instrument panel and a dash panel.

According to the present invention, this object is achieved by a vehicle equipped with an occupant's leg protection system as defined in claim 1. The dependent claims define preferred and advantageous embodiments of the invention.

The vehicle equipped with an occupant's leg protection system according to the present invention includes an airbag capable of deploying between the legs of an occupant seated in a vehicle seat and an instrument panel in front of the seat. The vehicle includes a closing panel for closing the space between the lower end of the instrument panel and the dash panel, whereby the closing panel is mounted to the vehicle body member through an impact absorbing mechanism.

With such a vehicle having an occupant's leg protection system, since the space between the lower end of the instrument panel and the dash panel is closed by the closing panel, the inflated airbag is prevented from entering the space. Accordingly, there is no need to increase the capacity and the inner pressure of the airbag in order to securely receive the ankles or the insteps of the occupant by the airbag as in the conventional systems, thus allowing reducing the cost of manufacturing the occupant's leg protection system.

The vehicle equipped with the occupant's leg protection system of the invention may arrange the occupant's leg protection system to any of the instrument panel, the dash panel, or the closing panel. When mounting the occupant's leg protection system to the closing panel, the process of mounting the closing panel and the process of mounting the occupant's leg protection system may be combined.

Fig. 1 is a longitudinal sectional view of a vehicle having an occupant's leg protection system according to an embodiment of the invention.

Fig. 2 is a longitudinal sectional view of a vehicle having an occupant's leg protection system according to another embodiment of the invention.

Fig. 3 is a longitudinal sectional view of a vehicle having an occupant's leg protection system according to yet another embodiment of the invention.

Fig. 4 is a longitudinal sectional view of a vehicle having an occupant's leg protection system according to an illustrative example.

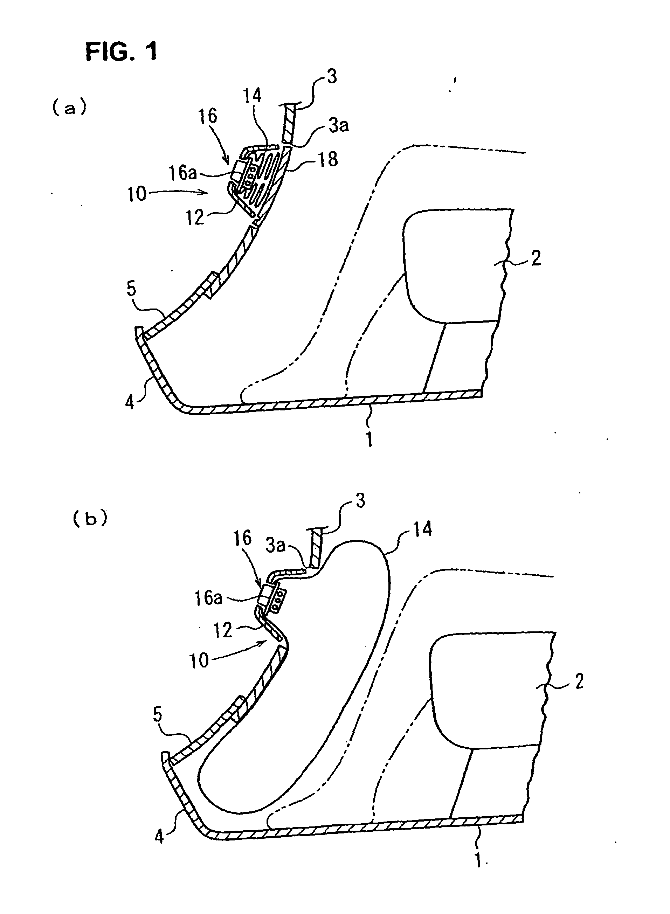

Embodiments will be described hereinafter with reference to the drawings. Fig. 1 is a longitudinal sectional view of a vehicle having an occupant's leg protection system according to an embodiment of the invention, Fig. 1(a) showing a state before an airbag is inflated and Fig. 1(b) showing a state after the airbag has been inflated.

A seat 2 is placed on a floor panel 1, and an instrument panel 3 is disposed in front of the seat 2. The instrument panel 3 curves in a convex shape toward the interior of the vehicle so as to come close to the front of the seat cushion of the seat 2. A dash panel 4 is arranged to connect the lower end of the instrument panel 3 and the front end of the floor panel 1. The dash panel 4 stands substantially upward from the front end of the floor panel 1 so as to face the toes of occupant's legs. There is a space between the lower end of the instrument panel 3 and the dash panel 4.

A closing panel 5 is placed between the instrument panel 3 and the dash panel 4 so as to close the space. The closing panel 5 is arranged substantially flush with the instrument panel 3. The closing panel 5 is securely fixed to a vehicle body member with a joint such as a bracket or another joining means (not shown).

The closing panel 5 may be mounted to the instrument panel 3, or alternatively, to the dash panel 4. Of course, it may be mounted both of the instrument panel 3 and the dash panel 4. It may be mounted to a rigid member other than the instrument panel 3 and the dash panel 4.

Although the closing panel 5 is arranged on the back of the instrument panel 3 in Fig. 1, it may be arranged on the right side of the instrument panel 3, or alternatively, it may be arranged so as to be fitted in the space between the lower end of the instrument panel 3 and the dash panel 4.

The closing panel 5 has a panel strength and a mounting strength sufficient to support the force that is applied when the lower part of an inflated airbag 14 (as will be described later) is pushed strongly to the closing panel 5 by the ankles or the insteps of the occupant's legs.

The ankles or the insteps of the occupant seated in a normal position in the seat 2 with the legs lower than the knees toeing forward are opposed to the closing panel 5, as shown in the drawing.

An opening 3a for passing the airbag through is provided to the instrument panel 3 so as to face the occupant's legs. An occupant's leg protection system 10 is placed on the back of the instrument panel 3 so as to face the opening 3a. The occupant's leg protection system 10 has a casing 12 whose front surface (adjacent to the occupant) is open, an airbag 14 housed in the casing 12 in a folded condition, and an inflator 16 for inflating the airbag 14. The front open area of the casing 12 is arranged to face the opening 3a. The opening 3a is closed by a lid 18 mounted substantially flush with the instrument panel 3.

The airbag 14 deploys along the front surface of the instrument panel 3, and in its fully deployed state, the upper part thereof inflates forward of the knees of the occupant and the lower part inflates forward of the ankles or the insteps, as shown in Fig. 1(b).

The airbag-through opening 3a and the occupant's leg protection system 10 are arranged in the vicinity of a height facing the knees of the occupant; however, they may be arranged at a height facing the shins lower than the knees.

The inflator 16 according to the embodiment is shaped like a disk, the end of which is inserted in the airbag 14 through an inflator opening (no shown) provided on the back of the airbag 14. A flange 16a projects radially from the peripheral side surface of the end of the inflator 16. The periphery of the inflator opening is air-tightly sandwiched between the flange 16a and the bottom of the casing 12.

The shape of the inflator 16 is not limited to the disk and it may be shaped like a column.

When a vehicle including the occupant's leg protection system 10 with such an arrangement comes in a frontal crash, the inflator 16 is activated to emit gas to inflate the airbag 14. The airbag 14 push-opens the lid 18 and deploys forward of the occupant's legs to receive them, thereby absorbing the impact applied to the occupant.

In the vehicle including the occupant's leg protection system 10, since the space between the lower end of the instrument panel 3 and the dash panel 4 is closed by the closing panel 5, the lower part of the airbag 14 does not retract into the space when the occupant's legs have hit against the lower part of the inflated airbag 14. Therefore, there is no need to increase the capacity and the inner pressure of the airbag 14 in order to sufficiently receive the ankles or the insteps of the occupant as in the conventional ones, which allows the production cost of the occupant's leg protection system to be reduced.

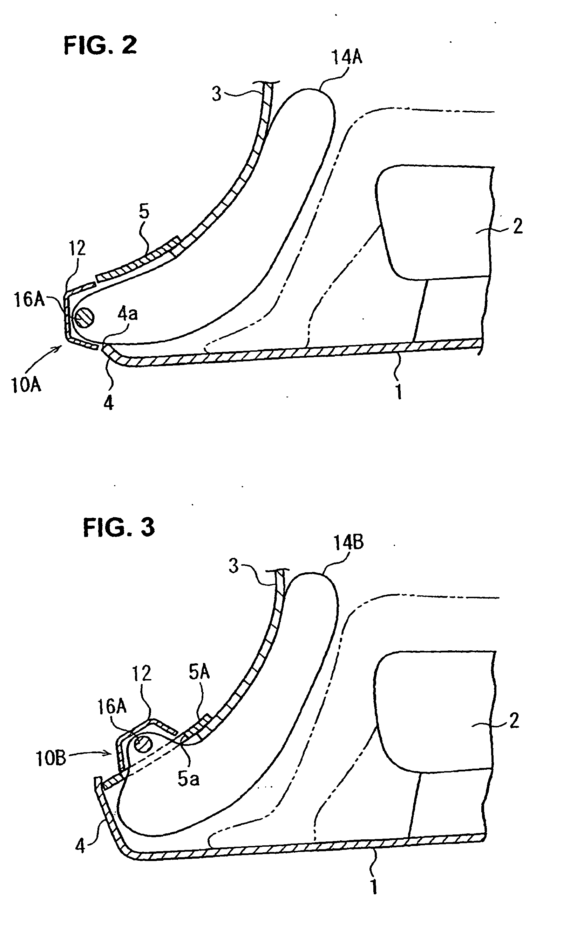

Fig. 2 is a longitudinal sectional view of the vicinity forward of a seat of a vehicle having an occupant's leg protection system according to another embodiment.

In this embodiment, an opening 4a for passing the airbag through is provided in the dash panel 4 forward of the toes of the occupant seated in a normal position in the seat 2. An occupant's leg protection system 10A is placed on the back of the dash panel 4 so as to face the opening 4a. The airbag-through opening 4a according to the embodiment is formed to cut off the dash panel 4 from the upper end. There is a space between the lower end of the instrument panel 3 and the upper rim of the opening 4a and the closing panel 5 is placed to close the space. The arrangement and the mounting structure of the closing panel 5 are the same as those of the embodiment of Fig. 1. Also in this embodiment, the closing panel 5 is opposed to the ankles or the insteps of the legs of the occupant seated in a normal position in the seat 2.

Also the occupant's leg protection system 10A includes the casing 12 whose front surface (adjacent to the occupant) is open, an airbag 14A housed in the casing 12 in a folded condition, and an inflator 16A for inflating the airbag 14A. The front surface of the casing 12 is closed by a lid (not shown).

With he airbag 14A according to the embodiment, the lower part of the airbag 14A first deploys forward of the toes to the ankles of the occupant's legs and the upper part the airbag then deploys forward of the knees upper than that.

The inflator 16A according to the embodiment is column shaped and is arranged to pass through the lower end of the airbag 14A along the width of the vehicle. The rear of the inflator 16A of the airbag 14A is joined to the casing 12 with a fastening (not shown). The position to mount the airbag 14A to the casing 12 is along the lower side of the airbag 14A.

Other arrangements of the vehicle including the occupant's leg protection system 10A are the same as those of the vehicle including the occupant's leg protection system 10 of Fig. 1. Therefore, the same components of Fig. 2 as those of Fig. 1 are given the same reference numerals and a description thereof will be omitted.

In the vehicle including the occupant's leg protection system 10A, the inflator 16A is activated to emit gas in the event of a car crash or the like. The lower part of the airbag 14A first inflates to deploy forward of the toes or the ankles of the occupant's legs by the gas from the inflator 16A and the upper part then deploys forward of the knees upper than that. The airbag 14A receives the occupant's legs.

Also in the vehicle including the occupant's leg protection system 10A, since the space between the lower end of the instrument panel 3 and the dash panel 4 (the upper rim of the opening 4a) is closed by the closing panel 5, the lower part of the airbag 14A is prevented from retracting into the space when the ankles or the insteps of the occupant's legs come in contact with the lower part of the inflated airbag 14A.

Also in the vehicle including the occupant's leg protection system 10A, the direction of the deployment of the airbag 14A is opposite to the direction of the forward movement of the legs for the occupant seated in a normal position in the seat 2 with the legs lower than the knees toeing forward as shown in the drawing. Therefore, a force to prevent the forward movement is applied to the legs from the inflating airbag 14A, thus decreasing the amount of the forward movement of the legs.

Fig. 3 is a longitudinal sectional view of a vehicle having an occupant's leg protection system according to yet another embodiment.

In this embodiment, a closing panel 5A arranged to close the space between the lower end of the instrument panel 3 and the dash panel 4 has an opening 5a for passing the airbag through and an occupant's leg protection system 10B is mounted on the back of the closing panel 5A so as to face the opening 5a. The mounting structure of the closing panel 5A is similar to those of the closing panel 5 according to the embodiments of Figs. 1 and 2.

Also the occupant's leg protection system 10B includes the casing 12 whose front surface (adjacent to the occupant) is open, an airbag 14B housed in the casing 12 in a folded condition, and the inflator 16A for inflating the airbag 14B. The front surface of the casing 12 is closed by a lid (not shown).

With the airbag 14B, the lower part of the airbag 14B first deploys forward of the ankles or the insteps of the occupant's legs and the upper part then deploys forward of the knees upper than that, as in the airbag 14A of Fig. 2.

The inflator 16A is column shaped with the same structure as that used in the embodiment of Fig. 2, and is arranged to pass through the lower part of the airbag 14B along the width of the vehicle. Also the rear of the inflator 16A of the airbag 14B is joined to the casing 12 with a fastening (not shown). The position to mount the airbag 14B to the casing 12 is along the lower side of the airbag 14B, as in the airbag 14A.

Other arrangements of the vehicle including the occupant's leg protection system 10B are the same as those of the vehicle including the occupant's leg protection system 10 of Fig. 1. Therefore, the same components of Fig. 3 as those of Fig. 1 are given the same reference numerals and a description thereof will be omitted.

Also in the vehicle including the occupant's leg protection system 10B, the inflator 16A is activated to emit gas in the event of a car crash or the like. The lower part of the airbag 14B first inflates to deploy forward of the toes or the ankles of the occupant's legs by the gas from the inflator 16A and the upper part then deploys forward of the knees upper than that. The airbag 14B receives the occupant's legs.

Also in the vehicle including the occupant's leg protection system 10B, since the space between the lower end of the instrument panel 3 and the dash panel 4 is closed by the closing panel 5A, the lower part of the airbag 14B is prevented from retracting into the space when the ankles or the insteps of the occupant's legs come in contact with the lower end of the inflated airbag 14B.

Also in the vehicle including the occupant's leg protection system 10B, the direction of the deployment of the airbag 14B is opposite to the direction of the forward movement of the legs for the occupant seated in a normal position in the seat 2, as shown in the drawing. Therefore, a force to prevent the forward movement is applied to the legs from the inflating airbag 14B, thus decreasing the amount of the forward movement of the legs.

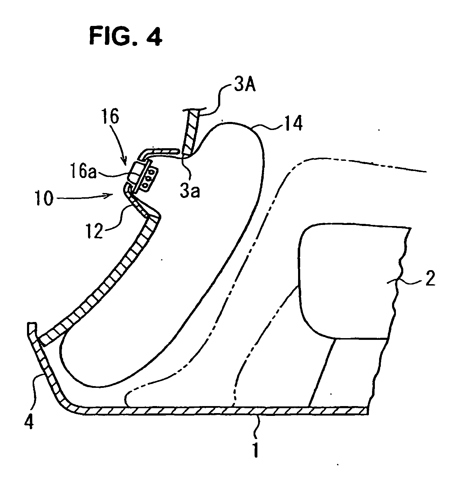

Fig. 4 is a longitudinal sectional view of a vehicle having an occupant's leg protection system according to an illustrative example.

In this example, the lower end of an instrument panel 3A extends toward the upper end of the dash panel 4, as shown in the drawing, and so there is substantially no space between the lower end of the instrument panel 3A and the dash panel 4. The instrument panel 3A has the airbag-through opening 3a arranged to face the occupant's legs and the occupant's leg protection system 10 is mounted on the back of the instrument panel 3A to face the opening 3a.

The arrangement of the occupant's leg protection system 10 and other arrangements of the vehicle including the occupant's leg protection system 10 are the same as those of the vehicle including the occupant's leg protection system 10 of Fig. 1. Therefore, the same components having the same functions are given the same reference numerals.

Also in the vehicle including the occupant's leg protection system 10, the inflator 16 is activated to emit gas in the event of a car crash. The airbag 14 deploys forward of the occupant's legs by the gas from the inflator 16. The airbag 14 receives the occupant's legs.

In the vehicle, there is substantially no space between the lower end of the instrument panel 3A and the dash panel 4. Therefore, the lower part of the airbag 14 is prevented from retracting when the toes or the insteps of the occupant's legs have hit against the lower part of the inflated airbag 14, thus allowing the toes or the insteps to be securely received by the inflated airbag 14.

Referring to Fig. 4, although the airbag-through opening 3a and the occupant's leg protection system 10 are arranged in the vicinity of a height facing the knees of the occupant, they may be arranged in the vicinity of a height facing the shins lower than the knees, or alternatively, they may be arranged at the lower end of the instrument panel 3A so as to face the ankles or the insteps of the occupant's legs. Also, the dash panel 4 may have an airbag-through opening (not shown), as in the embodiment of Fig. 2, and the occupant's leg protection system may be arranged on the back of the dash panel 4 so as to face the opening.

It is to be understood that the above-described embodiments are only examples of the present invention and the invention is not limited to the embodiments. For example, although the embodiments have the occupant's leg protection system at one of the instrument panel, the dash panel, and the closing panel, it may have occupant's leg protection systems at several positions. In the embodiments of Figs. 1 to 3, the closing panels 5 and 5A are separated from the instrument panel 3 and the dash panel 4; however, they may be integrated to one.

In the embodiments of Figs. 1 to 3, although the closing panels 5 and 5A are securely fixed to the vehicle body member and the like, the closing panels 5 and 5A are mounted to the vehicle body member through an impact-absorbing mechanism such as a bracket that is plastically deformed when the closing panels 5 and 5A are subjected to a sudden load from the airbag 14, to thereby absorb the impact. The closing panels 5 and 5A may be constructed to be deformed when a predetermined load or more are applied, to thereby absorb the impact.

### [Advantages]

As described above, the vehicle equipped with the occupant's leg protection system according to the invention has no space between the lower end of the instrument panel and the dash panel. Therefore, the lower part of an airbag is prevented from retracting into the space when the ankles or the insteps of the occupant's legs have hit against the lower part of the inflated airbag.

## Claims

1. A vehicle equipped with an occupant's leg protection system (10; 10A; 10B) including an airbag (14; 14A; 14B) capable of deploying between the legs of an occupant seated in a vehicle seat (2) and an instrument panel (3) in front of the seat (2), comprising:
a closing panel (5; 5A) for closing a space between a lower end of the instrument panel (3) and a dash panel (4),
**characterized in that**
the closing panel (5; 5A) is mounted to the vehicle body member through an impact absorbing mechanism.

2. A vehicle equipped with an occupant's leg protection system according to Claim 1, wherein the impact absorbing mechanism is a bracket that is plastically deformed when the closing panel (5; 5A) is subjected to a sudden load from the airbag (14; 14A; 14B).

3. A vehicle equipped with an occupant's leg protection system according to any one of the preceding claims, wherein the occupant's leg protection system (10; 10A; 10B) is mounted to any one of the instrument panel (3), the dash panel (4), and the closing panel (5; 5A).

## Patentansprüche

1. Fahrzeug, welches mit einem Beinschutzsystem (10; 10A; 10B) für Insassen mit einem Airbag (14; 14A; 14B), welcher geeignet ist zwischen den Beinen eines in einem Fahrzeugsitz (2) sitzenden Insassen und einem Armaturenbrett (3) vor dem Sitz (2) aufgeblasen zu werden, ausgestattet ist, umfassend:
eine Verschlussplatte (5; 5A) zum Verschließen eines Raumes zwischen einem unteren Ende des Armaturenbretts (3) und einem Trennblech (4),
**dadurch gekennzeichnet,**
**dass** die Verschlussplatte (5; 5A) an dem Fahrzeugkarosserieteil durch einen aufprallabsorbierenden Mechanismus angebracht ist.

2. Fahrzeug, welches mit einem Beinschutzsystem für Insassen nach Anspruch 1 ausgestattet ist, wobei der aufprallabsorbierende Mechanismus eine Halterung ist, welche plastisch verformt wird, wenn die Verschlussplatte (5; 5A) einer plötzlichen Belastung von dem Airbag (14; 14A; 14B) ausgesetzt ist.

3. Fahrzeug, welches mit einem Beinschutzsystem für Insassen gemäß einem der vorhergehenden Ansprüche ausgestattet ist, wobei das Beinschutzsystem (10; 10A; 10B) für Insassen an einem beliebigen von dem Armaturenbrett (3), dem Trennblech (4) und der Verschlussplatte (5; 5A) angebracht ist.

## Revendications

1. Véhicule équipé d'un système (10; 10A; 10B) de protection des jambes d'un occupant, comprenant un coussin (14; 14A; 14B) de sécurité gonflable pouvant se déployer entre les jambes d'un occupant assis sur un siège (2) de véhicule et un tableau (3) de bord en face du siège (2), comprenant:
- un panneau (5; 5A) de fermeture pour fermer un espace entre une extrémité inférieure du tableau (3) de bord et une planche (4) de bord,
**caractérisé en ce que**:
- le panneau (5; 5A) de fermeture est monté sur l'élément de carrosserie du véhicule, par l'intermédiaire d'un mécanisme d'amortissement des impacts.

2. Véhicule équipé d'un système de protection des jambes d'un occupant selon la revendication 1, dans lequel le mécanisme d'amortissement des impacts est un support qui se déforme plastiquement, lorsque le panneau (5; 5A) de fermeture est soumis à une charge soudaine provenant du coussin (14; 14A; 14B) de sécurité gonflable.

3. Véhicule équipé d'un système de protection des jambes d'un occupant selon l'une quelconque des revendications précédentes, dans lequel le système (10; 10A; 10B) de protection des jambes d'un occupant est monté soit sur le tableau (3) de bord, soit sur la planche (4) de bord, soit sur le panneau (5; 5A) de fermeture.
